# EUROPÄISCHE PATENTANMELDUNG

(11) **EP 2 937 317 A1**
(43) Veröffentlichungstag der Anmeldung: **28.10.2015**
(21) Anmeldenummer: 14171030.1
(22) Anmeldetag: 03.06.2014
(51) Int. Cl.: C02F 3/20

(54) **Abwasserbelüftungsanlage und Verfahren zur Abwasserbelüftung**

(30) Priorität: 25.04.2014 EP 14166060
(71) Anmelder: e-proxi ag, 8224 Löhningen (CH)
(72) Erfinder: Ellenberger, Markus, 8224 Löhningen (CH)
(74) Vertreter: Dr. Graf & Partner AG

(57) **Zusammenfassung**

Abwasserbelüftungsanlage (1) umfassend ein Luftansaugrohr (6), einen Verdichter (3) wie ein Drehkolbengebläse, eine Luftzufuhrleitung (7), einen Belüfter (4) sowie ein Becken (2), wobei das Luftansaugrohr (6) mit dem Verdichter (3) verbunden ist um Luft zuzuführen, und wobei die Luftzufuhrleitung (7) den Verdichter (3) mit dem Belüfter (4) verbindet, um dem Belüfter (4) Luft zuzuführen, wobei das Becken (2) während dem Betrieb eine Abwasseroberfläche (17a) aufweist, und wobei der Belüfter (4) unterhalb der Abwasseroberfläche (17a) im Becken (2) angeordnet ist, wobei der Verdichter (3) als ein unter Wasser betreibbares Tauchgebläse ausgestaltet ist, wobei der Verdichter (3) unterhalb der Abwasseroberfläche (17a) im Becken (2) angeordnet ist, und wobei das Luftansaugrohr (6) einen Lufteinlass (6a) aufweist, der oberhalb der Abwasseroberfläche (17a) angeordnet ist. Die Drehzahl des Verdichters (3) wird in Abhängigkeit des Sauerstoffgehaltes geregelt.

## Beschreibung

Die Erfindung betrifft eine Abwasserbelüftungsanlage sowie ein Verfahren zur Abwasserbelüftung.

### Stand der Technik

Es ist bekannt in Abwasserreinigungsanlagen eine biologische Abwasserreinigung nach dem Belebtschlammverfahren anzuwenden. In einem solchen Verfahren hat ein Reaktionsbecken die Funktion eines biologischen Reaktors indem das Abwasser durch die im belebten Schlamm enthaltenen Bakterien behandelt wird. Zur Aufrechterhalten der Reaktion wird dem Reaktionsbecken mit Hilfe einer Abwasserbelüftungsanlage Luft beziehungsweise Sauerstoff zugeführt. Der Betrieb einer derartigen biologischen Reinigungsstufe benötigt etwa 50% bis 70% des Energiebedarfs der gesamten Kläranlage. Solche bekannte Abwasserbelüftungsanlagen weisen den Nachteil auf, dass deren Bau und Betrieb relativ aufwändig und entsprechend teuer sind.

### Darstellung der Erfndung

Aufgabe der Erfindung ist es ein wirtschaftlich vorteilhaftere Abwasserbelüftungsanlage zu bilden.

Diese Aufgabe wird gelöst mit einer Abwasserbelüftungsanlage aufweisend die Merkmale von Anspruch 1. Die Unteransprüche 2 bis 11 betreffen weitere, vorteilhafte Ausgestaltungen. Die Aufgabe wird weiter gelöst mit einem Verfahren zur Abwasserbelüftung aufweisend die Merkmale von Anspruch 12. Die abhängigen Ansprüche 13 bis 15 betreffen weitere, vorteilhafte Verfahrensschritte.

Die Aufgabe wird insbesondere gelöst mit einer Abwasserbelüftungsanlage umfassend ein Luftansaugrohr, einen Verdichter, eine Luftzufuhrleitung, einen Belüfter sowie ein Becken, wobei das Luftansaugrohr mit dem Verdichter verbunden ist um Luft zuzuführen, und wobei die Luftzufuhrleitung den Verdichter mit dem Belüfter verbindet, um dem Belüfter Luft zuzuführen, wobei das Becken während dem Betrieb eine Abwasseroberfläche aufweist, und wobei der Belüfter unterhalb der Abwasseroberfläche im Becken angeordnet ist, wobei der Verdichter als ein unter Wasser betreibbares Tauchverdichter ausgestaltet ist, wobei der Verdichter unterhalb der Abwasseroberfläche im Becken angeordnet ist, und wobei das Luftansaugrohr einen Lufteinlass aufweist, der oberhalb der Abwasseroberfläche angeordnet ist.

Die Aufgabe wird weitere insbesondere gelöst mit einem Verfahren zum Belüften einer Abwasserbelüftungsanlage umfassend ein Luftansaugrohr, einen Verdichter, eine Luftzufuhrleitung, einen Belüfter sowie ein Becken, wobei das Becken mit Abwasser gefüllt ist und eine Abwasseroberfläche aufweist, wobei der Belüfter unterhalb der Abwasseroberfläche im Becken angeordnet ist, und wobei der Belüfter über das Luftansaugrohr, den Verdichter und die Luftzufuhrleitung mit Luft versorgt wird, wobei der Verdichter innerhalb des Abwassers angeordnet ist und vom Abwasser gekühlt wird, und wobei das Luftansaugrohr teilweise im Abwasser verläuft, damit die im Luftansaugrohr angesaugte Luft gekühlt wird.

Die erfindungsgemässe Abwasserbelüftungsanlage weist den Vorteil auf, dass der Verdichter innerhalb eines Beckens, zum Beispiel eines Biologiebeckens einer Kläranlage, und innerhalb des zu reinigenden Abwassers, d.h. unterhalb der Flüssigkeitsoberfläche angeordnet ist. Bekannte Abwasserbelüftungsanlagen umfassen ein Betriebsgebäude, in welchem die Verdichter angeordnet sind, wobei von den Verdichtern eine Luftzufuhrleitung bis in das Becken verläuft, um die Luft in das Becken zu leiten. Die erfindungsgemässe Abwasserbelüftungsanlage weist den Vorteil auf, dass deren Aufbau sehr kostengünstig ist, weil kein Betriebsgebäude erforderlich ist. Da der Verdichter innerhalb des Abwassers angeordnet ist, und das Abwasser üblicherweise beispielsweise eine Temperatur im Bereich zwischen 5 °C und 20 °C aufweist, ist der Verdichter nur geringen Temperaturschwankungen ausgesetzt. Eine zusätzliche Kühlung des Verdichters ist daher nicht erforderlich. Zudem ist eine Kühlung des bei bekannten Abwasserbelüftungsanlagen erforderlichen Betriebsgebäudes nicht nötig, da kein Betriebsgebäude mehr benötigt wird. Die erfindungsgemässe Abwasserbelüftungsanlage benötigt daher zum Betrieb weniger elektrische Energie. Die erfindungsgemässe Abwasserbelüftungsanlage kann somit unter optimalen Betriebsbedingungen und energieeffizient betrieben werden. Ein weiterer Vorteil der erfindungsgemässen Abwasserbelüftungsanlage besteht darin, dass das Luftansaugrohr, mit welchem Luft aus der Umgebung in den Verdichter angesaugt wird, entlang eines Teilabschnittes im Abwasser verläuft. Die durch das Luftansaugrohr strömende Luft wird durch das Luftansaugrohr gekühlt. Der Verdichter wird ebenfalls durch das Abwasser gekühlt, so dass die im Verdichter geförderte Luft ebenfalls gekühlt wird. Eine kühle Luft weist den Vorteil auf, dass diese einen höheren Sauerstoffanteil aufweist. Der in das Becken eingetragene Sauerstoffanteil pro Volumeneinheit Luft kann somit erhöht werden. Bekannte Abwasserbelüftungsanlagen weisen den Nachteil auf, dass die Luft in einem Betriebsgebäude bzw. in dem im Betriebsgebäude angeordneten Verdichter erwärmt wird, und dass die Luft danach über eine längere Zuführleitung in das Becken eingeleitet wird, wobei insbesondere während der kalten Jahreszeit das Problem auftritt, dass innerhalb der längeren Leitung auf Grund der Abkühlung Wasser auskondensiert und dieses Wasser dem Belüfter zugeführt wird. Die erfindungsgemässe Abwasserbelüftungsanlage weist den Vorteil auf, dass die Luftzufuhrleitung sehr kurz ausgestaltet ist. Die kurze Luftzufuhrleitung weist den weiteren Vorteil auf, dass diese im Vergleich zu bekannten Abwasserbelüftungsanlagen einen geringen Druckverlust aufweist. Die erfindungsgemässe Abwasserbelüftungsanlage kann deshalb Energie effizienter betrieben werden. Ein weiterer Vorteil ist darin zu sehen, dass die Abwasserbelüftungsanlage sehr leise betrieben werden kann, da sich der Verdichter unter Wasser befindet und deshalb keinen direkten Schall abstrahlen kann.

In einer besonders vorteilhaften Ausführungsform weist die Luftzufuhrleitung, welche den Verdichter mit dem Belüfter verbindet, einen siphonförmigen Abschnitt auf, mit einem aufsteigenden und einem absteigenden Teilabschnitt, und einem dazwischen oberhalb der Abwasseroberfläche verlaufenden Teilabschnitt. Dieser siphonförmige Abschnitt weist den Vorteil auf, dass bei einem Stillstand des Verdichters kein Abwasser vom Belüfter in den Verdichter gedrückt werden kann. Dadurch ist ein sicherer, zuverlässiger und wartungsarmer Betrieb des Verdichters gewährleistet. Zudem ist der Verdichter vor einem direkten Kontakt mit aggressiven Abwässern geschützt. Der siphonförmige Abschnitt weist zudem den Vorteil auf, dass dadurch zwischen dem Verdichter und dem Belüfter auf ein Rückschlagventil verzichtet werden kann. Ein Druckverlust über dem Rückschlagventil wird dadurch vermieden, sodass die erfindungsgemässe Abwasserbelüftungsanlage energieeffizienter betreibbar ist. Zudem umfasst die Abwasserbelüftungsanlage weniger Verschleissteile, was die Wartung reduziert und die Betriebssicherheit erhöht.

Der Verdichter kann in einer Vielzahl von Möglichkeiten ausgestaltet sein, um unter Wasser angeordnet zu sein, und um Luft zu fördern und zu verdichten. In einer vorteilhaften Ausgestaltung ist der Verdichter als fremd angetriebene Strömungsmaschine ausgestaltet, die mittels eines in einem Gehäuse rotierenden Laufrads ein gasförmiges Medium fördert und verdichtet. In einer besonders vorteilhaften Ausgestaltung ist der Verdichter als ein Drehkolbengebläse ausgestaltet. Der Verdichter könnte auch als Ventilator, Gebläse oder als Lüfter ausgestaltet sein. In einer vorteilhaften Ausführungsform ist der Verdichter als Luftkompressor, als Schraubengebläse, als Schraubenverdichter, als Rotationsverdichter oder als Seitenkanalverdichter ausgestaltet. In einer vorteilhaften Ausgestaltung liegt das Druckverhältnis des Verdichters zwischen Ansaugseite und Druckseite in einem Bereich zwischen 1,2 und 1,5.

In einer besonders vorteilhaften Ausgestaltung sind die Belüfter als plattenförmige Belüftung ausgestaltet. Solche plattenförmige Belüftung weisen den Vorteil auf, dass diese sehr nahe am Beckenboden angeordnet werden können, und dass diese die Luft in flächig sehr verteilter Form auslassen, was den Vorteil ergibt, dass ein Grossteil des Volumens des Beckens gleichmässig mit Luft versorgt wird.

In einer weiteren vorteilhaften Ausgestaltung umfasst die Abwasserbelüftungsanlage einen Sauerstoffsensor, welcher die Sauerstoffkonzentration des Abwassers im Becken misst, und umfasst die Abwasserbelüftungsanlage eine Regelungsvorrichtung, um die Drehzahl des Verdichters in Abhängigkeit der Sauerstoffkonzentration zu regeln, um sicherzustellen, dass das Abwasser eine durch einen Sollwert vorgegebene Sauerstoffkonzentration aufweist.

Die erfindungsgemässe Abwasserbelüftungsanlage weist den Vorteil auf, dass eine Abwasserbelüftungsanlage sehr kostengünstig erstellt und betrieben werden kann, oder dass ein bestehendes Abwasserbelüftungsbecken sehr kostengünstig modernisiert werden kann.

Die Erfindung wird nachfolgend anhand von mehreren Ausführungsbeispielen im Detail beschrieben.

### Kurze Beschreibung der Zeichnungen

Die zur Erläuterung der Ausführungsbeispiele verwendeten Zeichnungen zeigen:
- Fig. 1: schematisch eine Abwasserbelüftungsanlage mit drei Becken;
- Fig. 2: schematisch eine weitere Abwasserbelüftungsanlage mit einem Becken;
- Fig. 3: schematisch ein weiteres Ausführungsbeispiel einer Abwasserbelüftungsanlage;
- Fig. 4: das Ausführungsbeispiel gemäss Figur 3 im Detail;
- Fig. 5: eine weitere Detailansicht des in Figur 4 dargestellten Drehkolbengebläse mit Haltevorrichtung;
- Fig. 6: einen Querschnitt durch ein Drehkolbengebläse;
- Fig. 7: einen Querschnitt durch einen Belüfter.

Grundsätzlich sind in den Zeichnungen gleiche Teile mit gleichen Bezugszeichen versehen.

### Wege zur Ausführung der Erfindung

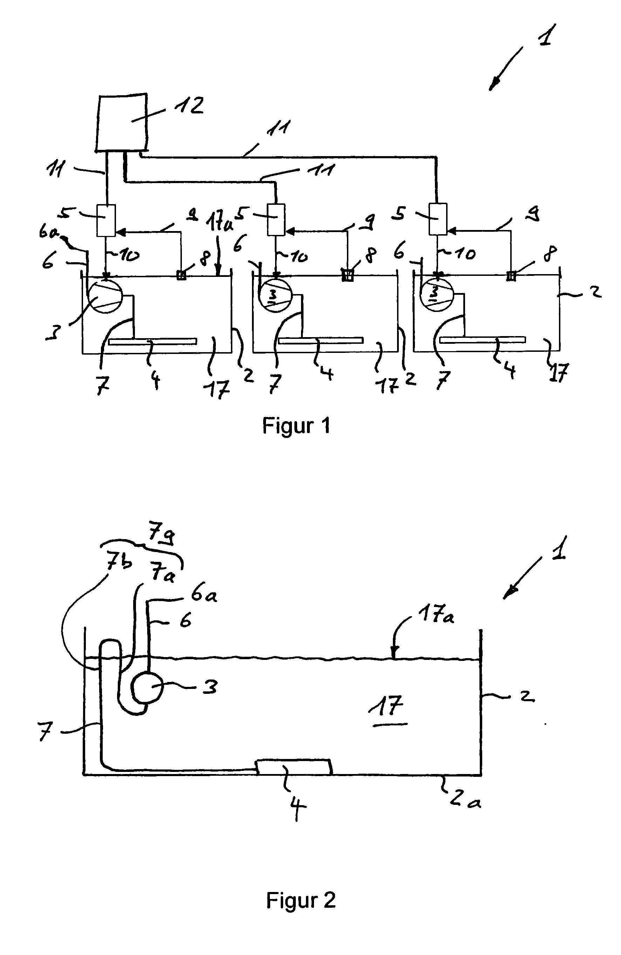

Fig. 1 zeigt eine Abwasserbelüftungsanlage 1 umfassend drei Biologiebecken, nachfolgend auch als Becken 2 bezeichnet, welche mit Abwasser 17 gefüllt sind. In jedem der Becken 2 ist innerhalb des Abwassers 17, das heisst unterhalb der Abwasseroberfläche 17a, je ein als Drehkolbengebläse ausgestalteter Verdichter 3 angeordnet. Das Drehkolbengebläse 3 wird durch ein über die Abwasseroberfläche 17a vorstehendes Luftansaugrohr 6 mit Umgebungsluft versorgt. Das Drehkolbengebläse 3 ist über eine Luftzufuhrleitung 7 Fluid leitend mit einem Belüfter 4 verbunden, um die angesaugte Umgebungsluft über den Belüftung 4 in das Becken 2 einzuleiten. Jedem Becken 2 ist ein Sauerstoffsensor 8 zugeordnet, welcher die Sauerstoffkonzentration im Abwasser 17 erfasst. Der Sauerstoffsensor 8 ist über eine Signalleitung 9 mit einer Regelungsvorrichtungen 5 verbunden. Die Regelungsvorrichtungen 5 steuert das Drehkolbengebläse 3 über eine elektrische Leitung 10 an, wobei die Drehzahl des Drehkolbengebläses 3 in Abhängigkeit der Sauerstoffkonzentration des Abwassers 17 geregelt wird. Die Regelungsvorrichtungen 5 sind über elektrische Leitungen 11 mit einer elektrischen Energieversorgung 12 verbunden.

Figur 2 zeigt schematisch ein weiteres Ausführungsbeispiel einer Abwasserbelüftungsanlage 1. Die Abwasserbelüftungsanlage 1 umfasst wiederum ein Becken 2 enthaltend Abwasser 17 mit einer Abwasseroberfläche 17 a. Innerhalb des Abwassers 17 ist ein als Drehkolbengebläse ausgestalteter Verdichter 3 angeordnet, welches über ein vertikal verlaufendes Luftansaugrohr 6 mit Lufteintrittsöffnung 6a mit der Umgebungsluft verbunden ist. Das Drehkolbengebläse 3 ist über eine Luftzufuhrleitung 7 mit einem Belüfter 4 verbunden. Die Luftzufuhrleitung 7 umfasst einen siphonförmig verlaufenden Teilabschnitt 7g, mit einem aufsteigenden Teilabschnitt 7a und einem absteigenden Teilabschnitt 7b wobei der aufsteigende und der absteigende Teilabschnitt 7a, 7b teilweise oberhalb der Abwasseroberfläche 17a verlaufen. Durch diese Anordnung ist sichergestellt, dass auch bei einem Stillstand des Drehkolbengebläses 3 kein Abwasser 17 vom Belüfter 4 in das Drehkolbengebläse 3 gedrückt wird. Im dargestellten Ausführungsbeispiel verlaufen die Teilabschnitte 7a, 7b im Wesentlichen vertikal. Zumindest einer der Teilabschnitte7a, 7b könnte auch schräg bzw. quer bezüglich der Abwasseroberfläche 17a verlaufen. Der siphonförmige Teilabschnitt 7g könnte auch derart angeordnet sein, dass dieser vollständig innerhalb des Abwassers 17 angeordnet ist, wobei der höchste Punkt des siphonförmigen Teilabschnittes 7g vorzugsweise höher angeordnet ist als das Drehkolbengebläse 3.

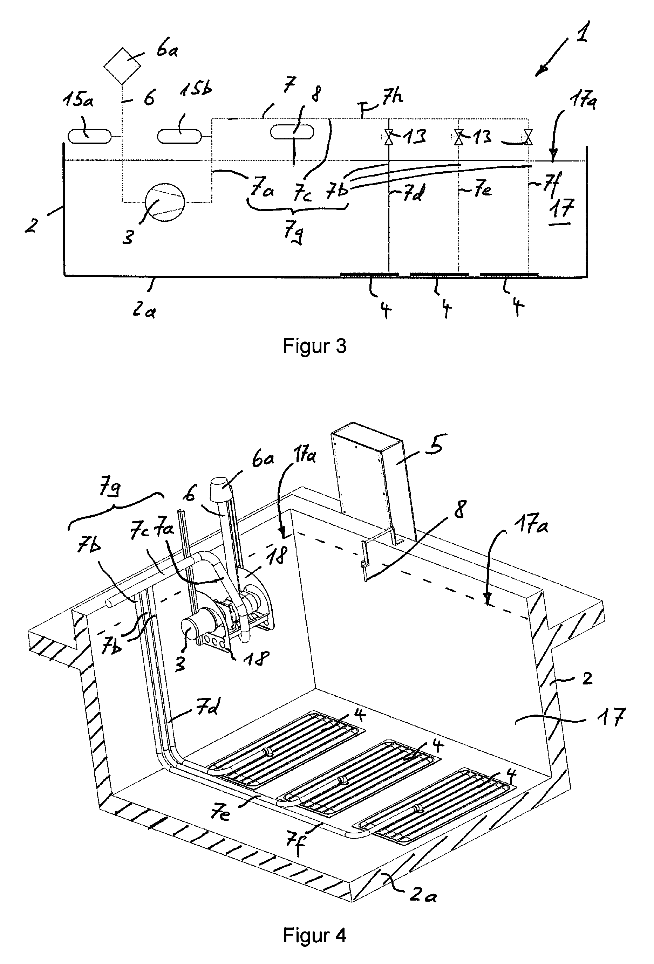

Figur 3 zeigt ein weiteres Ausführungsbeispiel einer Abwasserbelüftungsanlage 1. Die Abwasserbelüftungsanlage 1 umfasst wieder ein Becken 2 in welchem sich Abwasser 17 mit einer Abwasseroberfläche 17a befindet. Innerhalb des Abwassers 17 ist ein als Drehkolbengebläse ausgestalteter Verdichter 3 angeordnet. Ein vertikal verlaufendes Luftansaugrohr 6 mit Luftfilter 6a versorgt das Drehkolbengebläse 3 mit Umgebungsluft. Das Drehkolbengebläse 3 ist über eine Luftzufuhrleitung 7 beziehungsweise über Luftverteilrohre 7d, 7e, 7f Fluid leitend mit drei Belüftern 4 verbunden. Jedes Luftverteilerrohr 7d, 7e, 7f weist einen absteigenden Abschnitt 7b auf. Die Luftzufuhrleitung 7 umfasst nachfolgend dem Drehkolbengebläse 3 einen aufsteigenden Abschnitt 7a, einen horizontal verlaufenden Abschnitt 7c und teilt sich danach in drei separat verlaufende Luftverteilrohre 7d, 7e, 7f auf, welche je einen Belüfter 4 mit Umgebungsluft versorgen. Der aufsteigende Abschnitt 7a, der horizontal verlaufende Abschnitt 7c sowie die drei absteigenden Abschnitte 7b bilden einen siphonförmigen Abschnitt 7g. Bei den drei absteigenden Abschnitten 7b ist jeweils ein Ventil 13 angeordnet, die sich über der Abwasseroberfläche 17a befinden, um über das jeweilige Ventil 13 die Durchflussmenge Umgebungsluft einzustellen. Die Abwasserbelüftungsanlage 1 umfasst zudem einen Drucksensor 15a zur Messung des Drucks im Luftansaugrohr 6, und umfasst zudem einen Drucksensor 15b zur Messung des Drucks im aufsteigenden Abschnitt 7a, und umfasst einen Sauerstoffsensor 8 zur Messung des Sauerstoffgehaltes im Abwasser 17. Die Drucksensoren 15a, 15b sowie der Sauerstoffsensor 8 tauschen die gemessenen Daten mit der nicht dargestellten Regelungsvorrichtungen 5 aus. Der in den Figuren 1 bis 3 schematisch dargestellte Verdichter 3 kann in einer Vielzahl von Ausführungsformen ausgebildet sein, um unter Wasser betrieben zu werden, und dabei Luft zu fördern und zu verdichten.

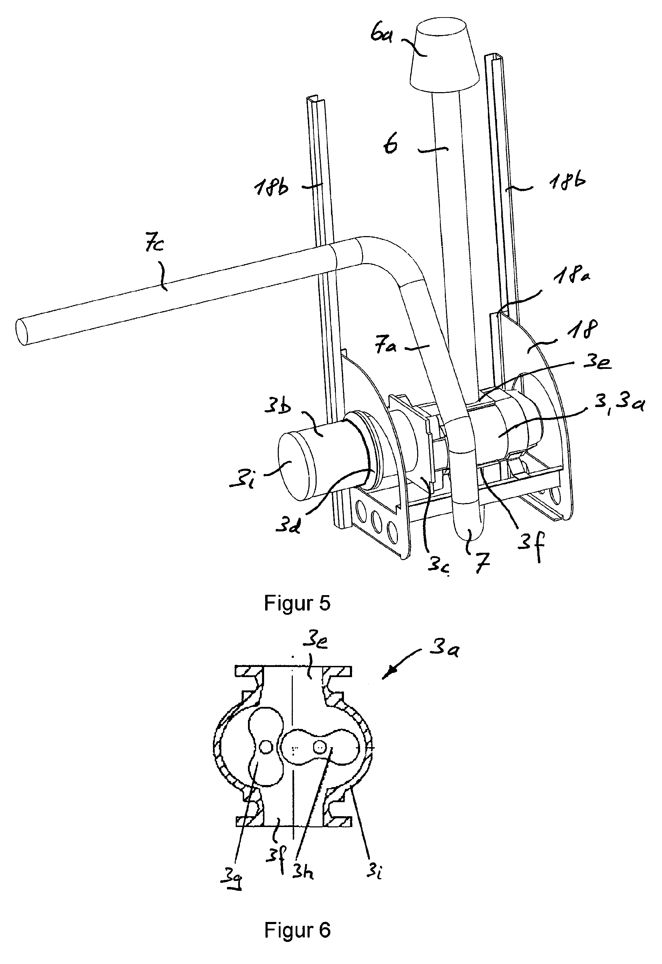

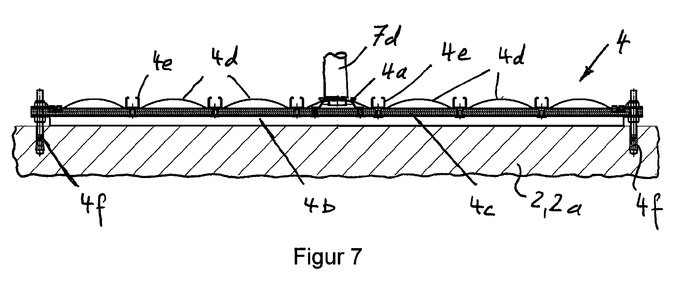

Figur 4 zeigt die in Figur 3 dargestellte Abwasserbelüftungsanlage 1 in einer perspektivischen Ansicht, teilweise im Schnitt. Die Abwasseroberfläche 17a ist nur am Rand des Beckens 2 angedeutet. Figur 5 zeigt das in Figur 4 dargestellte Drehkolbengebläse 3 im Detail. Das Drehkolbengebläse 3 umfasst ein Gebläseteil 3a sowie ein Motorteil 3b. Das Gebläseteil 3a weist oben eine Lufteinlassöffnung 3e auf, und weist unten eine Luftauslassöffnung 3f auf. Das Gebläseteil 3a weist, wie in Figur 6 in einem Schnitt schematisch dargestellt, im Innenraum zwei drehbar gelagerte Drehkolben 3g, 3h auf. Das Gebläseteil 3a sowie das Motorteil 3b sind innerhalb eines gemeinsamen, gegen aussen Fluid dichten Gehäuses 3i angeordnet. Ein solches Gebläse wird auch als Tauchgebläse bezeichnet, da dieses unter Wasser dicht ist und unter Wasser betreibbar ist. Das Drehkolbengebläse 3 umfasst zudem einen Gehäuseflansch 3c sowie einen Motorenflansch 3d. Das Drehkolbengebläse 3 ist je nach Anwendung vorzugsweise derart dimensioniert, dass es ein Ansaugvolumen Luft im Bereich von 40 bis 6000 Nm³/h, d.h. 40 bis 6000 Normkubikmeter Luft pro Stunde fördern kann. Figur 5 zeigt weitere Details der in Figur 4 dargestellten Abwasserbelüftungsanlage 1. Die Abwasserbelüftungsanlage 1 umfasst eine Haltevorrichtungen 18 mit einem Gleitteil 18a und einer an einer Seitenwand des Beckens 2 befestigten Schiene 18b, um das Drehkolbengebläse 3 in vertikaler Richtung zu verschieben, oder zur Wartung aus dem Becken 2 zu heben. Das Drehkolbengebläse 3 umfassend das Gebläse Teil 3a sowie das Motorteil 3b ist fest mit der Haltevorrichtung 18 verbunden, derart, dass das Drehkolbengebläse 3 bei einer im Becken 2 angeordneten Haltevorrichtung 18 in horizontaler Richtung verläuft. Figur 5 zeigt zudem das in das Drehkolbengebläse 3 münden Luftansaugrohr 6, sowie ein Teil der Luftzufuhrleitung 7 mit aufsteigendem Abschnitt 7a. Wie in Figur 4 dargestellt bilden der aufsteigende Abschnitt 7a, der horizontal verlaufende Abschnitt 7c sowie die drei absteigenden Abschnitte 7b den siphonförmig verlaufenden Abschnitt 7g. Am Beckenboden 2a sind drei Belüfter 4 angeordnet, wobei in Figur 7 einen Schnitt durch einen derartigen Belüfter 4 im Detail dargestellt ist.

Der Belüfter 4 umfasst eine Bodenleiste 4b und darüber angeordnet eine Grundplatte 4c. Oberhalb der Grundplatte 4c ist eine Membranfolie 4d angeordnet, so dass sich zwischen der Membranfolie 4d und der Grundplatte 4c einen Zwischenraum ausbildet, welcher Fluid leitend mit dem Luftanschluss 4a verbunden ist, so dass Luft aus dem Luftverteiler 7d über den Luftanschluss 4a in den Zwischenraum einströmt. Die Membranfolie 4d weist eine Perforation mit einer Vielzahl von Löchern auf, durch welche die Luft nach oben abgegeben wird, vorzugsweise als Luftbläschen mit einem Durchmesser von bis zu 3 mm. Der Belüfter 4 umfasst eine Mehrzahl von gegenseitig beabstandet angeordneten Niederhalteleisten 4e, um die Membranfolie 4d niederzuhalten. Der Belüfter 4 umfasst Befestigungsmittel 4f, um den Belüfter 4 fest am Beckenboden 2a zu verankern. Vorteilhafterweise ist der plattenförmige Belüftung 4 in vertikaler Richtung in einem Bereich von 1 cm bis 10 m vom Beckenboden 2a der Abstand angeordnet. Die Belüfter könnten auch andere als die in den Figuren 4 und 7 dargestellte Formen aufweisen, und beispielsweise als tellerförmige oder rohrförmige Belüfter ausgestaltet sein.

Die Abwasserbelüftungsanlage 1 umfassend ein Luftansaugrohr 6, ein Drehkolbengebläse 3, eine Luftzufuhrleitung 7, einen Belüfter 4 sowie ein Becken 2, wird derart betrieben, dass der Belüfter 4 über das Luftansaugrohr 6, das Drehkolbengebläse 3 und die Luftzufuhrleitung 7 mit Luft versorgt wird, wobei das Drehkolbengebläse 3 innerhalb des Abwassers angeordnet ist und vom Abwasser gekühlt wird, und wobei das Luftansaugrohr 6 teilweise im Abwasser verläuft damit die im Luftansaugrohr 6 angesaugte Luft gekühlt wird.

Vorteilhafterweise wird die Luft zwischen dem Drehkolbengebläse 3 und dem Belüfter 4 entlang eines Teilabschnittes 7a,7b der Luftzufuhrleitung 7 oberhalb der Abwasseroberfläche 17a geführt, um einen Siphoneffekt zu bewirken.

Die Abwasserbelüftungsanlage 1 wird vorzugsweise derart betrieben, dass der Sauerstoffgehalt des Abwassers 17 gemessen wird, und dass die Drehzahl des Drehkolbengebläses 3 in Abhängigkeit des Sauerstoffgehaltes geregelt wird, wobei vorzugsweise ein Sauerstoffsollwert vorgegeben ist, und wobei die Drehzahl derart geregelt wird, dass der Sauerstoffgehalt des Abwassers 17 im Wesentlichen dem Sauerstoffsollwert entspricht.

## Patentansprüche

1. Abwasserbelüftungsanlage (1) umfassend ein Luftansaugrohr (6), einen Verdichter (3), eine Luftzufuhrleitung (7), einen Belüfter (4) sowie ein Becken (2), wobei das Luftansaugrohr (6) mit dem Verdichter (3) verbunden ist um Luft zuzuführen, und wobei die Luftzufuhrleitung (7) den Verdichter (3) mit dem Belüfter (4) verbindet, um dem Belüfter (4) Luft zuzuführen, wobei das Becken (2) während dem Betrieb eine Abwasseroberfläche (17a) aufweist, und wobei der Belüfter (4) unterhalb der Abwasseroberfläche (17a) im Becken (2) angeordnet ist, **dadurch gekennzeichnet, dass** der Verdichter (3) als ein unter Wasser betreibbarer Tauchverdichter ausgestaltet ist, dass der Verdichter (3) unterhalb der Abwasseroberfläche (17a) im Becken (2) angeordnet ist, und dass das Luftansaugrohr (6) einen Lufteinlass (6a) aufweist, der oberhalb der Abwasseroberfläche (17a) angeordnet ist.

2. Abwasserbelüftungsanlage nach Anspruch 1, **dadurch gekennzeichnet, dass** der Verdichter (3) als ein Drehkolbengebläse ausgestaltet ist.

3. Abwasserbelüftungsanlage nach Anspruch 1 oder 2, **dadurch gekennzeichnet, dass** die Luftzufuhrleitung (7) zwischen dem Verdichter (3) und dem Belüfter (4) einen siphonförmigen Abschnitt (7g) ausbildet, mit einem aufsteigenden Teilabschnitt (7a) und einem absteigenden Teilabschnitt (7b), wobei der aufsteigende und der absteigende Teilabschnitt (7a, 7b) teilweise oberhalb der Abwasseroberfläche (17a) verläuft.

4. Abwasserbelüftungsanlage nach Anspruch 3, **dadurch gekennzeichnet, dass** der aufsteigende Teilabschnitt (7a) in einen Verteilungsabschnitt (7c) mündet, wobei der Verteilabschnitt (7c) oberhalb der Abwasseroberfläche (17a) angeordnet ist und eine Mehrzahl von Ventilen (13) umfasst, und wobei jedes Ventil (13) über ein Luftverteilrohr (7d, 7e, 7f) mit einem Belüfter (4) verbunden ist.

5. Abwasserbelüftungsanlage nach Anspruch 4, **dadurch gekennzeichnet, dass** der Belüfter (4) als ein plattenförmiger Belüfter ausgestaltet ist, dass das Becken (2) einen Beckenboden (2a) aufweist, und dass die plattenförmigen Belüfter (4) parallel zum Beckenboden (2a) verlaufend angeordnet sind.

6. Abwasserbelüftungsanlagen nach Anspruch 5, **dadurch gekennzeichnet, dass** der plattenförmige Belüfter in vertikaler Richtung in einem Bereich von 1 cm bis 10 cm vom Beckenboden (2a) beabstandet angeordnet ist.

7. Abwasserbelüftungsanlage nach Anspruch 5 oder 6, **dadurch gekennzeichnet, dass** der plattenförmige Belüfter eine perforiere Membran (4d) aufweist, welche derart angeordnet ist, dass die Luft über die perforierte Membran (4d) in das Wasser abgegeben wird.

8. Abwasserbelüftungsanlage nach Anspruch 4, **dadurch gekennzeichnet, dass** der Belüfter (4) als ein tellerförmiger oder ein rohrförmiger Belüfter ausgestaltet ist, dass das Becken (2) einen Beckenboden (2a) aufweist, und dass die Belüfter (4) parallel zum Beckenboden (2a) verlaufend angeordnet sind.

9. Abwasserbelüftungsanlage nach einem der vorhergehenden Ansprüche, **dadurch gekennzeichnet, dass** der Verdichter (3) in einer Haltevorrichtung (18) befestigt ist, und dass die Haltevorrichtung (18) in vertikaler Richtung verschiebbar innerhalb des Beckens (2) angeordnet ist.

10. Abwasserbelüftungsanlage nach Anspruch 9, **dadurch gekennzeichnet, dass** der Verdichter (3) horizontal verlaufend in der Haltevorrichtung (18) angeordnet ist, und dass der Lufteinlass (3e) und der Luftauslass (3f) in vertikaler Richtung verlaufend angeordnet sind.

11. Abwasserbelüftungsanlage nach einem der vorhergehenden Ansprüche, **dadurch gekennzeichnet, dass** diese eine Regelungsvorrichtung (5) sowie einen Sauerstoffsensor (8) umfasst, wobei zumindest Teile der Regelungsvorrichtung (5) im Verdichter (3) angeordnet sind.

12. Verfahren zum Belüften einer Abwasserbelüftungsanlage (1) umfassend ein Luftansaugrohr (6), einen Verdichter (3), insbesondere ein Drehkolbengebläse, eine Luftzufuhrleitung (7), einen Belüfter (4) sowie ein Becken (2), wobei das Becken (2) mit Abwasser gefüllt ist und eine Abwasseroberfläche (17a) aufweist, wobei der Belüfter (4) unterhalb der Abwasseroberfläche (17a) im Becken (2) angeordnet ist, und wobei der Belüfter (4) über das Luftansaugrohr (6), den Verdichter (3) und die Luftzufuhrleitung (7) mit Luft versorgt wird, **dadurch gekennzeichnet, dass** der Verdichter (3) innerhalb des Abwassers angeordnet ist und vom Abwasser gekühlt wird, und dass das Luftansaugrohr (6) teilweise im Abwasser verläuft, damit die im Luftansaugrohr (6) angesaugte Luft gekühlt wird.

13. Verfahren nach Anspruch 12, **dadurch gekennzeichnet, dass** die Luft zwischen dem Verdichter (3) und dem Belüfter (4) entlang eines Teilabschnittes (7a,7b) der Luftzufuhrleitung oberhalb der Abwasseroberfläche (17a) geführt wird.

14. Verfahren nach einem der Ansprüche 12 oder 13,
**dadurch gekennzeichnet, dass** der Sauerstoffgehalt des Abwassers gemessen wird und dass die Drehzahl des Verdichters (3) in Abhängigkeit des Sauerstoffgehaltes geregelt wird.

15. Verfahren nach einem der Ansprüche 12 bis 14, **dadurch gekennzeichnet, dass** im Belüfter (4) Luftbläschen mit einem Durchmesser von bis zu 3 mm erzeugt werden.
